# EUROPEAN PATENT SPECIFICATION

(11) **EP 3 848 596 B1**
(45) Date of publication and mention of the grant of the patent: **18.10.2023**
(21) Application number: 20151340.5
(22) Date of filing: 13.01.2020
(51) Int. Cl.: F16B 25/00, F16B 25/10

(54) **SELF-DRILLING SCREW**
SELBSTBOHRENDE SCHRAUBE
VIS AUTO-PERCEUSE

(43) Date of publication of application: 14.07.2021
(73) Proprietor: Taiwan Shan Yin International Co., Ltd., Kaohsiung City 806 (TW)
(72) Inventor: Su, Kou-Tsair, 806 Kaohsiung City (TW); Su, Yu-Jung, 806 Kaohsiung City (TW)
(74) Representative: Cabinet Chaillot

(56) References cited:
- EP-A1- 3 244 077
- WO-A1-2010/083634
- WO-A1-2010/148626
- CN-Y- 2 929 298

## Description

### BACKGROUND OF THE INVENTION

### 1. Field of the Invention

This invention relates to a screw and relates particularly to a self-drilling screw.

### 2. Description of the Related Art

Fig. **1** shows a conventional self-drilling screw **1** disclosed by Taiwan patent no. 1560371. The screw **1** includes a head **11**, a shank **12** connected to the head **11** and provided with threads spirally formed thereon, and a drilling portion **13** connected to the shank **12.** The drilling portion **13** has a drilling body **131** extending from the shank **12**, two opposite flutes **133** formed on the drilling body **131**, and opposite bevel surfaces **132** connected to the drilling body **131** and converging on a tip **134** with an included angle **134a.** Two cutting edges **135** each are formed at a place where the flute **133** and the bevel surface **132** meet. In operation, a force is added to rotate the head **11** after the tip **134** is put on a surface of a workpiece (not shown) . The cutting edges **135** serve to cut the workpiece, and then chips caused by the cutting action travel along the flute **133** for being removed from the workpiece. The shank **12** with thread convolutions are gradually screwed into the workpiece during the cutting action, thereby completing a screwing operation.

Generally, the included angle **134a** affects the cutting performance of the cutting edges **135** and the sharpness of the tip **134.** For example, if the included angle **134a** is smaller, the tip **134** becomes sharper and is easy to puncture the surface of the workpiece. However, the small included angle **134a** cause the reduction in the area of the cutting edges **135**, and this reduction decreases the cutting effect and renders the screw **1** unable to be smoothly screwed into the workpiece. To solve this problem, the included angle **134a** is generally set above 120 degrees. However, the angle of more than 120 degrees is unfavorable to the operation of positioning the screw **1** because the sharpness of the tip **134** declines.

Furthermore, the tip **134** serves as a single contact point for meeting the surface of the workpiece at the beginning of the screwing operation, and the friction between the tip **134** and the workpiece is small when the workpiece has a glossy surface. Accordingly, the tip **134** cannot stand upright on the surface of the workpiece efficiently in case the tip **134** is not sharp enough. In that case, the screw **1** deviates from its normal screwing path easily and thus is unable to be smoothly screwed into the workpiece. The improper screwing operation of the screw **1** also breaks the surface of the workpiece easily. In addition, chips are generated between the bevel surfaces **132** when the cutting edges **135** execute the cutting operation. This situation causes the entrance to the flutes **133** to be easily blocked by the accumulation of the chips and incurs high screwing resistance. The excessive accumulation of the chips also adds undue pressure to the workpiece and causes the workpiece to crack easily during the operation. Thus, the screw **1** needs to be improved.

WO 2010/083634 A1 discloses self-drilling screw that consists essentially of a screw head, a rod body, a plurality of screw threads which are formed on the rod body and extended along the axis direction, and a bore tail part, wherein a drilling point is extended forward from the bore tail part by taking the central line as the center, and two symmetrical tangential sections are excavated on both sides of the bore tail part, and the tangential section forms a crumb discharge groove and a side edge and extends backwards, an end edge is formed on the placement of drilling lines between the drilling point and the two side edges, and the end edge shows concave shape, thus it makes the drilling point more protrudent, and shortens the distance of that two side edges drill the object.

### SUMMARY OF THE INVENTION

The object of this invention is to provide a self-drilling screw capable of screwing accurately, quickly, and firmly and also capable of decreasing screwing resistance and preventing the workpiece from cracking during the screwing operation.

The self-drilling screw of this invention is as defined in claim 1 and includes a head with a bottom surface, a shank extending longitudinally from the bottom surface of the head and defining a central axis, and a plurality of thread convolutions spirally disposed around the shank. The shank forms a leading section located opposite to the head. The leading section includes a drill body, two opposite discharge grooves formed on opposite sides of the drill body, and two cutting edges each formed at a place where the drill body meets each of the two opposite discharge grooves. A drilling portion is formed at a distal end of the drill body opposite to the head and terminates at a first tip. The central axis of the shank passes through the first tip. Two blade portions are formed on the drill body and located opposite to each other so that the drilling portion is located between the two blade portions. Each blade portion is connected to each of the two cutting edges and tapers at a second tip. Two opposite concave surfaces are recessedly formed on the opposite sides of the drill body. Each of the two concave surfaces extends from the drilling portion to each of the blade portions. The drilling portion has a first included angle defined between 30 degrees and 60 degrees.

Each blade portion has a second included angle defined between 30 degrees and 50 degrees. A distance between the first tip and the head is larger than a distance between the second tip and the head. Accordingly, when the concave surfaces are formed from the drilling portion and the blade portions, the end of the leading section shows a shape of a curved bow riser when viewed in a bottom plan view whereby the drilling portion is accurately positioned on a surface of the workpiece at the beginning of the screwing operation, and the blade portions cut the workpiece quickly in a sharp way. Chips caused by the cutting operation are quickly led to the concave surfaces and the discharge grooves for quick removal and are concurrently severed by the cutting edges for preventing the entanglement and undue accumulation of the chips, decreasing resistance to the screwing operation, and preventing the workpiece from cracking.

Preferably, each of the cutting edges, each of the blade portions, or both of the cutting edge and the blade portion can extend in a counterclockwise direction when viewed from the distal end of the drill body for facilitating a smooth and sharp cutting operation.

Preferably, the bottom surface of the head has a plurality of slots formed thereon, thereby allowing the head to be flush with the surface of the workpiece.

### BRIEF DESCRIPTION OF THE DRAWINGS

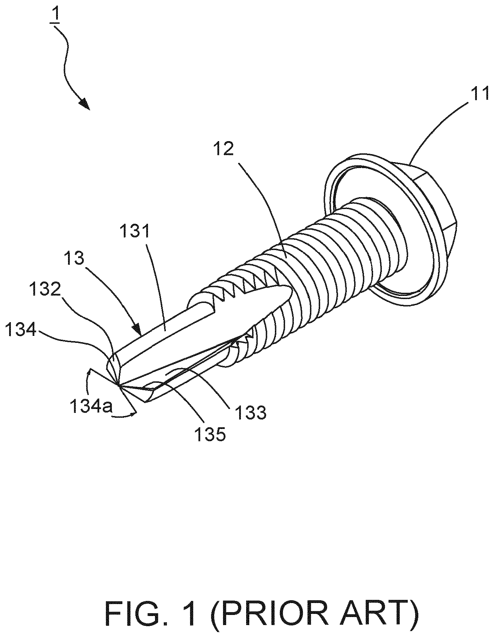

Fig. 1 is a perspective view showing a conventional self-drilling screw;
Fig. 2 is a schematic view showing a first preferred embodiment of this invention in a front elevational view;
Fig. 2A is an enlarged view showing the encircled portion A of Fig. 2;
Fig. 3 is a partial and enlarged side view of Fig. 2;
Fig. 4 is a bottom plan view of Fig. 2;
Fig. 5 is a cross-sectional view taken along the A-A line of Fig. 3;
Fig. 6 is a schematic view showing the screwing operation of the first preferred embodiment of this invention; and
Fig. 7 is a schematic view showing a second preferred embodiment of this invention.

### DETAILED DESCRIPTION OF THE PREFERRED EMBODIMENTS

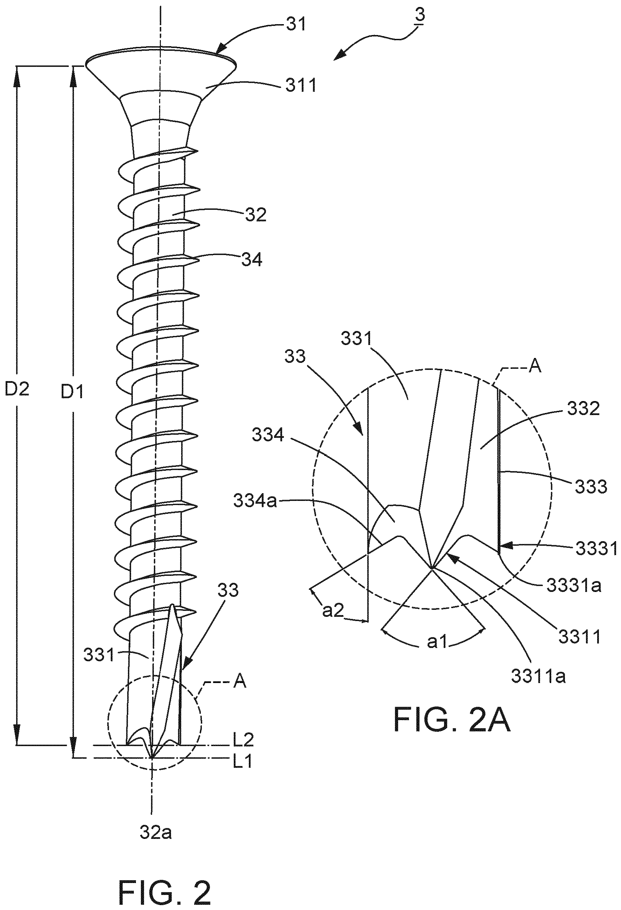

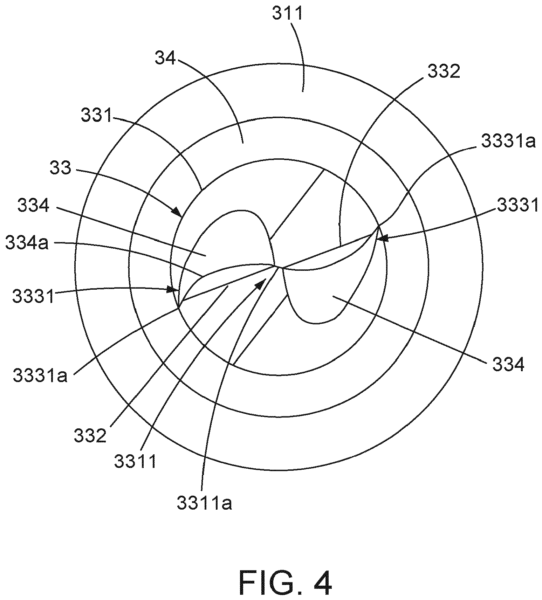

Referring to Fig. **2** and Fig. **2A**, a first preferred embodiment of a self-drilling screw **3** includes a head **31** having a bottom surface **311**, a shank **32** extending longitudinally from the bottom surface **311** and defining a central axis **32a**, and a plurality of thread convolutions **34** spirally disposed around the shank **32.** A leading section **33** is defined on the shank **32.** Specifically, the shank **32** forms the leading section **33** located opposite to the head **31**. As shown in Fig. **4**, the leading section **331** includes a drill body **331** extending by a certain length, two opposite discharge grooves **332** formed on opposite sides of the drill body **331**, and two cutting edges **333** formed opposite to each other. Each cutting edge **333** is formed at a place where the drill body **331** meets each discharge groove **332.** It is noted that each discharge groove **332** is enclosed by a wall surface which may be vertical, inclined, or curved, and the cutting edge **332**, as shown, is the place where the wall surface of the discharge groove **332** come into contact with the adjacent drill body **331.**

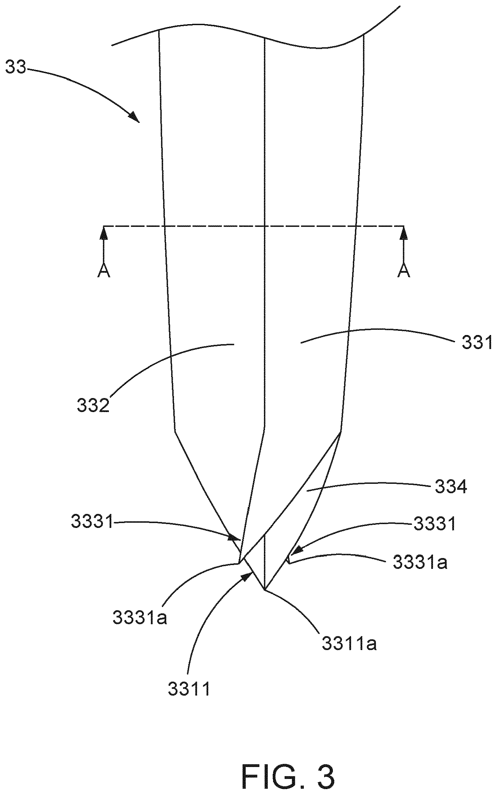

On the drill body **331** are formed a drilling portion **3311** with a first tip **3311a**, two blade portions **3331** each connected to each of the cutting edges **333**, and two opposite concave surface **334** extending between the drilling portion **3311** and the blade portions **3331.** The drilling portion **3311** is formed at a distal end of the drill body **331** situated opposite to the head **31.** The drilling portion **3311** terminates at the first tip **3311a** situated at a center of the shank **32.** In other words, the central axis **32a** passes through the first tip **3311a.** Each blade portion **3331** is a portion extending from each cutting edge **333** and tapering at a second tip **3331a.** The two blade portions **3331** are located opposite to each other, so the drilling portion **3311** with the first tip **3311a** is located between the two second tips **3331a** of the two blade portions **3331**, as shown in Figs. **2** to **4****.** Each concave surface **334** is a surface curved inwards or recessedly formed on each side of the drill body **331** and extending from the drilling portion **3311** to each blade portion **3331.** Thus, it is preferable that each concave surface **334**, as shown, forms a curved line **334a** between each second tip **3331a** and the first tip **3311a.** Further, in the preferred embodiment, it is preferable that the first tip **3311a** and the second tips **3331a** are situated at different places. In other words, they are not on the same horizontal line. For example, Fig. **2** shows at least two parallel horizontal reference lines **L1**, **L2**, one of which passes the first tip **3311a** and the other one passes one or both second tips **3331a.** The first horizontal line **L1** is set below the second horizontal line **L2** so that a distance **D1** between the first tip **3311a** and the head **31** is larger than a distance **D2** between the second tip **3331a** and the head **31.**

The drilling portion **3311** has a first included angle **a1** of between 30 degrees and 60 degrees. Each blade portion **3331** has a second included angle **a2** of between 30 degrees and 50 degrees. Accordingly, the drilling portion **3311** and the blade portions **3331** can have an optimum sharpness for decreasing screwing resistance, namely the resistance to the screwing operation.

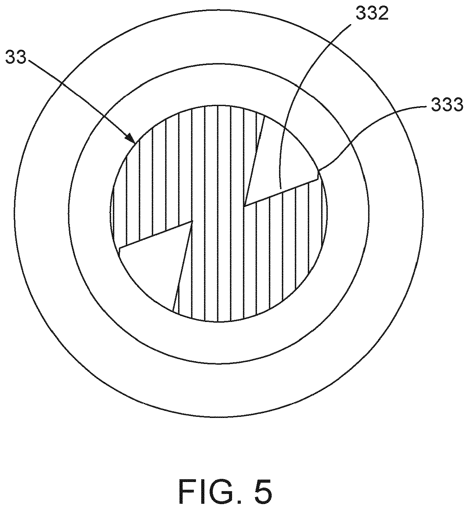

Referring to Fig. **5**, it is preferable that each cutting edge **333** extends in a counterclockwise direction when viewed from the distal end of the drill body **331.** For example, a surface portion of the drill body **331** may be slightly curved or inclined and then meet the adjacent discharge groove **332** at the cutting edge **333** so that the cutting edge **333** points in a direction which is the same as a screwing direction of the screw **3** when viewed from the head **31.** Thus, the cutting edge **333** faces the discharge groove **332** as shown to execute a smooth and sharp cutting operation. It is also preferable that each blade portion **3331**, shown in Fig. **4**, extends in a counterclockwise direction when viewed from the distal end of the drill body **331**, thereby allowing the second tip **3331a** to point in a direction which is the same as the screwing direction and face each discharge groove **332** when viewed from the head **31.** According to the above arrangement, a curvilinear way is presented so that the outline of the end of the leading section **33** shows a shape of a curved bow riser in Fig. **4****.**

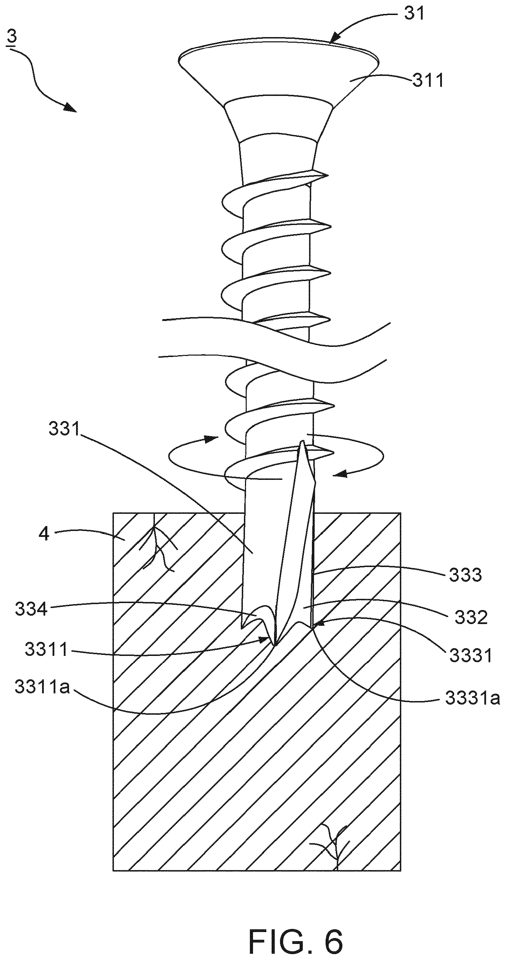

A screwing operation of this invention is described with the aid of Figs. **2** to **6****.** The drilling portion **331** is put on a surface of a workpiece **4** before the screwing operation starts. Because the first tip **3311a** is set below the two second tips **3331a**, the first tip **3311a** serves as a single contact point against the workpiece **4.** Because of the optimum sharpness caused by the first included angle **a1** of not more than 60 degrees, this single contact point punctures the workpiece **4** easily for being firmly and accurately positioned. When the head **31** is rotated in a screwing direction as arrowed in Fig. **6** and the first tip **3311a** enters the workpiece **4** gradually under the rotation of the head **31**, the two second tips **3331a** come into contact with the workpiece **4.** Because the second tips **3331a** of the blade portions **3331** point in the screwing direction when viewed from the head **31** and cooperate with the first tip **3311a**, multiple points are created for cutting the workpiece **4** at the beginning of the screwing operation. Meanwhile, the outline of the curved bow riser, formed when the blade portions **3331**, concave surfaces **334**, and the drilling portion **3311** are arranged as a whole, also assists the blade portions **3331** in cutting the workpiece **4** in a sharp way and decreases the friction between the drill body **331** and the workpiece **4** to reduce the screwing resistance. Then, chips caused by the cutting operation of the drilling portion **3311** and blade portions **3331** are directly led to the discharge grooves **332** which extend from the drilling portion **3311** to an outer side of respective blade portions **3331** for attaining quick removal. It is also possible that the chips pass the concave surfaces **334** and then enter the discharge grooves **332.** The concave surfaces **334** also help reduce the contact area between the drill body **331** and the workpiece **4** to decrease the friction and screwing resistance. Thus, the chips are removed smoothly and quickly, and the accumulation of excessive chips is prevented so that the workpiece **4** does not crack easily.

When the chips move to the discharge grooves **332**, the cutting edges **333** keep cutting the chips. Because the cutting edges **333**, formed along the border of the discharge grooves **332**, point in the screwing direction when viewed from the head **31**, the cutting edges **333** not only cut but also sever the chips efficiently to prevent the chips from twisting round the drill body **331** and decrease the resistance. Thus, the screw **3** is quickly screwed into the workpiece to complete the screwing operation.

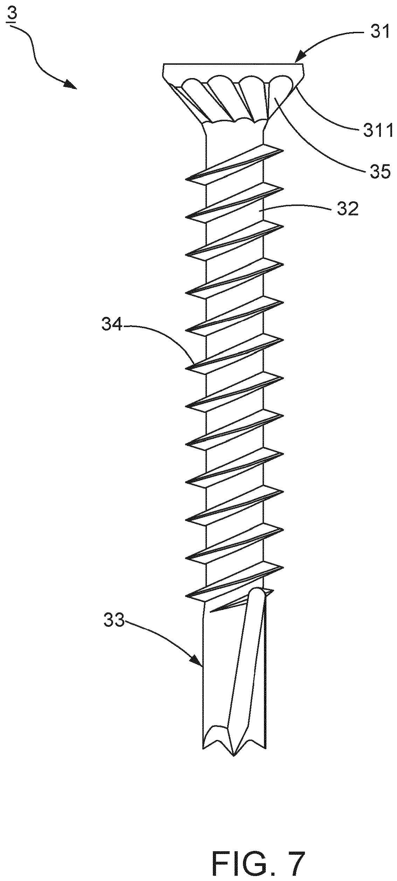

Referring to Fig. **7**, a second preferred embodiment of a self-drilling screw **3** has the same elements and operations as those of the first preferred embodiment. The second preferred embodiment is characterised in that the bottom surface **311** of the head **31** has a plurality of slots **35** formed thereon. When the head **31** meets the surface of the workpiece (not shown in this figure), the slots **35** cut and press the chips and also allow the head **31** to fit flush with the surface of the workpiece, thereby increasing the fastening effect.

To sum up, this invention takes advantage of two blade portions and two concave surfaces at two sides of the drilling portion to make the end of the leading section present a shape of a curved bow riser. By the above arrangement, the first tip of the drilling portion is accurately positioned on the workpiece and then the second tips of the blade portions and the cutting edges cut for drilling into the workpiece quickly in a sharp way. The concave surfaces and the discharge grooves of the leading section facilitate quick removal of chips caused by the cutting operations. Thus, undue accumulation of chips is prevented to decrease the screwing resistance and prevent the workpiece from cracking during the screwing operation.

While the embodiments are shown and described above, it is understood that further variations and modifications may be made without departing from the scope of this invention as defined by the appended claims.

## Claims

1. A self-drilling screw (3) comprising:
a head (31) having a bottom surface (311);
a shank (32) extending longitudinally from said bottom surface (311) of said head (31) and defining a central axis (32a), wherein said shank (32) forms a leading section (33) located opposite to said head (31), said leading section (33) including a drill body (331), two opposite discharge grooves (332) formed on opposite sides of said drill body (331), and two cutting edges (333) each formed at a place where said drill body (331) meets each of said opposite discharge grooves (332);
a plurality of thread convolutions (34) spirally disposed around said shank (32);
a drilling portion (3311) formed at a distal end of said drill body (331) opposite to said head (31) and terminating at a first tip (3311a), with a first horizontal line (L1) passing said first tip (3311a), said central axis (32a) of said shank (32) passing through said first tip (3311a), two blade portions (3331) being formed on said drill body (331) and located opposite to each other so that said drilling portion (3311) is located between said two blade portions (3331); and
said drill body (331) defining two curved lines (334a) at two sides of said first tip (3311a);
wherein each of said two blade portions (3331) extends from each of said two cutting edges (333) and tapers to form a second tip (3331a) having a second included angle (a2) defined between 30 degrees and 50 degrees, with a second horizontal line (L2) passing said second tip (3331a), two opposite concave surfaces (334) being recessedly formed on said opposite sides of said drill body (331) to define said two curved lines (334a), each of said two curved lines (334a) being formed at an edge where each of said two concave surfaces (334) meets each of said two discharge grooves (332) and formed by extending from said first tip (3311a) to each said second tip (3311a), with a point of each said curved line (334a) furthest from said first horizontal line (L1) being above said second horizontal line (L2) to facilitate a sharp cutting operation executed by said two blade portions (3331),
wherein said first tip (3311a) of said drilling portion (3311) has a first included angle (a1) defined between 30 degrees and 60 degrees, with said first included angle (a1) being larger than said second included angle (a2), a distance (D1) between said first tip (3311a) and said head (31) being larger than a distance (D2) between each said second tip (3331a) and said head (31).

2. The self-drilling screw (3) according to claim 1, wherein each of said two cutting edges (333) extends in a counterclockwise direction when viewed from said distal end of said drill body (331) .

3. The self-drilling screw (3) according to claim 1 or 2, wherein each of said two blade portions (3331) extends in a counterclockwise direction when viewed from said distal end of said drill body (331) .

4. The self-drilling screw (3) according to any one of claims 1 to 3, wherein said bottom surface (311) of said head (31) has a plurality of slots (35) formed thereon.

## Patentansprüche

1. Selbstbohrende Schraube (3), umfassend:
einen Kopf (31) mit einer unteren Fläche (311);
einen Schaft (32), der sich der Länge nach von der unteren Fläche (311) des Kopfs (31) erstreckt und eine zentrale Achse (32a) definiert, wobei der Schaft (32) einen vorderen Abschnitt (33) bildet, der sich gegenüber dem Kopf (31) befindet, wobei der vordere Abschnitt (33) einen Bohrkörper (331), zwei einander gegenüberliegende Auslaufnuten (332), die auf gegenüberliegenden Seiten des Bohrkörpers (331) gebildet sind, und zwei Schneidekanten (333) beinhaltet, die jeweils an einer Stelle gebildet sind, an der der Bohrkörper (331) auf jede der gegenüberliegenden Auslaufnuten (332) trifft;
eine Vielzahl von Schraubenwindungen (34), die spiralförmig um den Schaft (32) angeordnet ist;
einen Bohrabschnitt (3311), der an einem distalen Ende des Bohrkörpers (331) gegenüber dem Kopf (31) gebildet ist und an einer ersten Spitze (3311a) endet, wobei eine erste horizontale Linie (L1) durch die Spitze (3311a) verläuft, wobei die zentrale Achse (32a) des Schafts (32) durch die erste Spitze (3311a) verläuft, wobei zwei Klingenabschnitte (3331) auf dem Bohrkörper (331) gebildet sind und sich einander gegenüberliegend befinden, so dass sich der Bohrabschnitt (3311) zwischen den zwei Klingenabschnitten (3331) befindet; und
wobei der Bohrkörper (331) zwei gekrümmte Linien (334a) an zwei Seiten der ersten Spitze (3311a) definiert;
wobei sich jeder der zwei Klingenabschnitte (3331) von jeder der zwei Schneidekanten (333) erstreckt und sich verjüngt, um eine zweite Spitze (3331a) zu bilden, die einen zweiten eingeschlossenen Winkel (a2) aufweist, der zwischen 30 Grad und 50 Grad definiert ist, wobei eine zweite horizontale Linie (L2) durch die zweite Spitze (3331a) verläuft, wobei zwei einander gegenüberliegende konkave Flächen (334) versenkt auf den gegenüberliegenden Seiten des Bohrkörpers (331) gebildet sind, um die zwei gekrümmten Linien (334a) zu definieren, wobei jede der zwei gekrümmten Linien (334a) an einer Kante gebildet ist, an der jede der zwei konkaven Flächen (334) auf jede der zwei Auslaufnuten (332) trifft, und gebildet, in dem sie sich von der ersten Spitze (3311a) an jede zweite Spitze (3311a) erstreckt, wobei sich ein Punkt jeder der gekrümmten Linien (334a), der am weitesten von der ersten horizontalen Linie (L1) entfernt ist, über der zweiten horizontalen Linie (L2) befindet, um einen scharfen Schneidevorgang zu ermöglichen, der von den zwei Klingenabschnitten (3331) durchgeführt wird,
wobei die erste Spitze (3311a) des Bohrabschnitts (3311) einen ersten eingeschlossenen Winkel (a1) aufweist, der zwischen 30 Grad und 60 Grad definiert ist, wobei der erste eingeschlossene Winkel (a1) grösser als der zweite eingeschlossene Winkel (a2) ist, wobei ein Abstand (D1) zwischen der ersten Spitze (3311a) und dem Kopf (31) grösser als ein Abstand (D2) zwischen jeder zweiten Spitze (3331a) und dem Kopf (31) ist.

2. Selbstbohrende Schraube (3) nach Anspruch 1, wobei sich jede der zwei Schneidekanten (333) in eine Richtung entgegen dem Uhrzeigersinn, gesehen von dem distalen Ende des Bohrkörpers (331), erstreckt.

3. Selbstbohrende Schraube (3) nach Anspruch 1 oder 2, wobei sich jeder der zwei Klingenabschnitte (3331) in eine Richtung entgegen dem Uhrzeigersinn, gesehen von dem distalen Ende des Bohrkörpers (331), erstreckt.

4. Selbstbohrende Schraube (3) nach einem der Ansprüche 1 bis 3, wobei die untere Fläche (311) des Kopfs (31) eine Vielzahl von Schlitzen (35) aufweist, die darauf gebildet sind.

## Revendications

1. Vis auto-perceuse (3) comprenant :
une tête (31) ayant une surface inférieure (311) ;
une tige (32) s'étendant longitudinalement à partir de ladite surface inférieure (311) de ladite tête (31) et définissant un axe central (32a), ladite tige (32) formant une section d'attaque (33) située à l'opposé de ladite tête (31), ladite section d'attaque (33) comprenant un corps de perçage (331), deux rainures d'évacuation opposées (332) formées sur des côtés opposés dudit corps de perçage (331), et deux bords de coupe (333) formés chacun à un endroit où ledit corps de perçage (331) rencontre chacune desdites rainures d'évacuation opposées (332) ;
une pluralité de circonvolutions de filet (34) disposées en spirale autour de ladite tige (32) ;
une partie de perçage (3311) formée à une extrémité distale dudit corps de perçage (331) opposée à ladite tête (31) et se terminant à une première pointe (3311a), avec une première ligne horizontale (L1) passant par ladite première pointe (3311a), ledit axe central (32a) de ladite tige (32) passant par ladite première pointe (3311a), deux parties lames (3331) étant formées sur ledit corps de perçage (331) et situées à l'opposé l'une de l'autre de telle sorte que ladite partie de perçage (3311) est située entre lesdites deux parties lames (3331) ; et
ledit corps de perçage (331) définissant deux lignes incurvées (334a) de part et d'autre de ladite première pointe (3311a) ;
chacune desdites deux parties lames (3331) s'étendant à partir de chacun desdits deux bords de coupe (333) et s'effilant pour former une seconde pointe (3331a) ayant un second angle inclus (a2) défini entre 30 degrés et 50 degrés, avec une seconde ligne horizontale (L2) passant par ladite seconde pointe (3331a), deux surfaces concaves opposées (334) étant formées en retrait sur lesdits côtés opposés dudit corps de perçage (331) pour définir lesdites deux lignes incurvées (334a), chacune desdites deux lignes incurvées (334a) étant formée à un bord où chacune desdites deux surfaces concaves (334) rencontre chacune desdites deux rainures d'évacuation (332) et formée en s'étendant à partir de ladite première pointe (3311a) jusqu'à chaque seconde pointe précitée (3311a), avec un point de chaque ligne incurvée précitée (334a) le plus éloigné de ladite première ligne horizontale (L1) étant au-dessus de ladite seconde ligne horizontale (L2) pour faciliter une opération de coupe tranchante exécutée par lesdites deux parties lames (3331),
ladite première pointe (3311a) de ladite partie de perçage (3311) ayant un premier angle inclus (a1) défini entre 30 degrés et 60 degrés, avec ledit premier angle inclus (a1) plus grand que ledit second angle inclus (a2), une distance (D1) entre ladite première pointe (3311a) et ladite tête (31) étant plus grande qu'une distance (D2) entre chaque seconde pointe précitée (3331a) et ladite tête (31) .

2. Vis auto-perceuse (3) selon la revendication 1, dans laquelle chacun desdits deux bords de coupe (333) s'étend dans une direction antihoraire lorsque vu depuis ladite extrémité distale dudit corps de perçage (331).

3. Vis auto-perceuse (3) selon la revendication 1 ou 2, dans laquelle chacune desdites deux parties lames (3331) s'étend dans une direction antihoraire lorsque vue depuis ladite extrémité distale dudit corps de perçage (331) .

4. Vis auto-perceuse (3) selon l'une quelconque des revendications 1 à 3, dans laquelle ladite surface inférieure (311) de ladite tête (31) a une pluralité de fentes (35) formées sur celle-ci.
